(19) **Europäisches Patentamt**

**European Patent Office**

**Office européen des brevets**

(11) **EP 0 984 355 A2**

(12) **EUROPÄISCHE PATENTANMELDUNG**

(43) Veröffentlichungstag:
**08.03.2000 Patentblatt 2000/10**

(51) Int. Cl.$^7$: **G06F 7/24**

(21) Anmeldenummer: **99117219.8**

(22) Anmeldetag: **01.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.09.1998 DE 19839806**

(71) Anmelder:
**SIEMENS AKTIENGESELLSCHAFT**
**80333 München (DE)**

(72) Erfinder: **Braun, Christoph**
**52355 Düren (DE)**

(54) **Vorrichtung zur schnellen Bestimmung n grösster Signale, wobei n eine vorgebbare Anzahl ist**

(57)    Der Anmeldungsgegenstand betrifft eine Vorrichtung bei der Eingangssignalworte in Form eines sogenannten punktierten Thermometerkodes zu erweiterten Eingangsworten kodiert werden bevor sie einer Sortierlogik zugeführt werden, die ihrerseits ein Addiermodul, ein Vergleichermodul, ein Schaltermodul und ein Kodierermodul enthält. Das Kodierermodul KM markiert eine vorgebbare Anzahl von Eingangsworten als größte Eingangsworte. Der Vorteil liegt in der hohen Verarbeitungsgeschwindigkeit insbesondere bei hohen Eingangszahlen.

FIG 1

EP 0 984 355 A2

**Beschreibung**

Die Erfindung betrifft eine Vorrichtung, bei der Eingangssignale mit Hilfe einer Vielzahl von Vergleicherschaltungen verglichen bzw. sortiert werden.

Aus dem Lehrbuch von L. Borucki, „Digitaltechnik", 1996, ISBN 3-519-36415-8 ist aus Kapitel 10 auf den Seiten 198 und 199 eine Möglichkeit für einen stellenweisen Vergleich zweier Eingangsworte bekannt.

Üblicherweise wird die Rangfolge von mehr als zwei Eingangssignalen mit einer kaskadenartigen Struktur aus Vergleichern ermittelt, wobei jeder Vergleicher die Entscheidung für zwei Eingangsgrößen trifft und jeweils den größten Eingangswert an die nächste Vergleicherstufe weitergibt, bis schließlich die letzte Vergleicherstufe das größte Eingangssignal ermittelt. Werden darüber hinaus noch weitere nächstgrößere Werte benötigt, so können jeweils die bereits ermittelten größten Werte für eine weitere Suche entsprechend ausgeschlossen werden. Bei einer derartigen einfachen Sortiervorrichtung ist die Verarbeitungszeit proportional zur Anzahl M der Eingangssignale, was insbesondere bei großen Werten N von besonderem Nachteil ist.

Die der Erfindung zugrundeliegende Aufgabe besteht nun darin, eine Vorrichtung anzugeben, die bei vergleichbarem Schaltungsaufwand, insbesondere bei großen Eingangszahlen, eine höhere Verarbeitungsgeschwindigkeit erlaubt.

Diese Aufgabe wird erfindungsgemäß durch die Merkmale des Patentanspruchs 1 gelöst. Die weiteren Patentansprüche betreffen bevorzugte Ausgestaltungen der Erfindung.

Die Erfindung wird anhand eines in den Zeichnungen dargestellten Beispiels näher erläutert. Dabei zeigt

Figur 1     ein Blockschaltbild einer erfindungsgemäßen Vorrichtung,

Figur 2     eine Logiktabelle zur Erläuterung der Kodierer von Figur 1,

Figur 3     ein detailliertes Blockschaltbild der Sortierlogik des Ausführungsbeispiels der Erfindung,

Figur 4     ein weiteres detailliertes Blockschaltbild der Sortierlogik des Ausführungsbeispiels der Erfindung mit einem detailliert dargestellten Addierermodul und

Figur 5     eine Hierarchie von Addiererschaltungen zur Erläuterung der nichtlinearen Abhängigkeit der Verzögerungszeit von der Anzahl der Eingänge.

Die Erfindung basiert auf der Idee, die Rangfolge der Eingangswertigkeiten und deren Prioritäten schon durch die Reihenfolge der Eingangssignale für eine Sortierlogik festzulegen. Dazu müssen die üblicherweise binärkodierten Eingangssignale zunächst in einen sogenannten „punktierten Thermometerkode" umgewandelt werden. Der Vorteil der Erfindung besteht darin, daß aufgrund einer kaskadenartigen Struktur von gewöhnlichen Addierern lediglich eine logarithmische Abhängigkeit zwischen der Anzahl der Eingangssignale und der gesamten Verzögerungs- bzw. Verarbeitungszeit besteht.

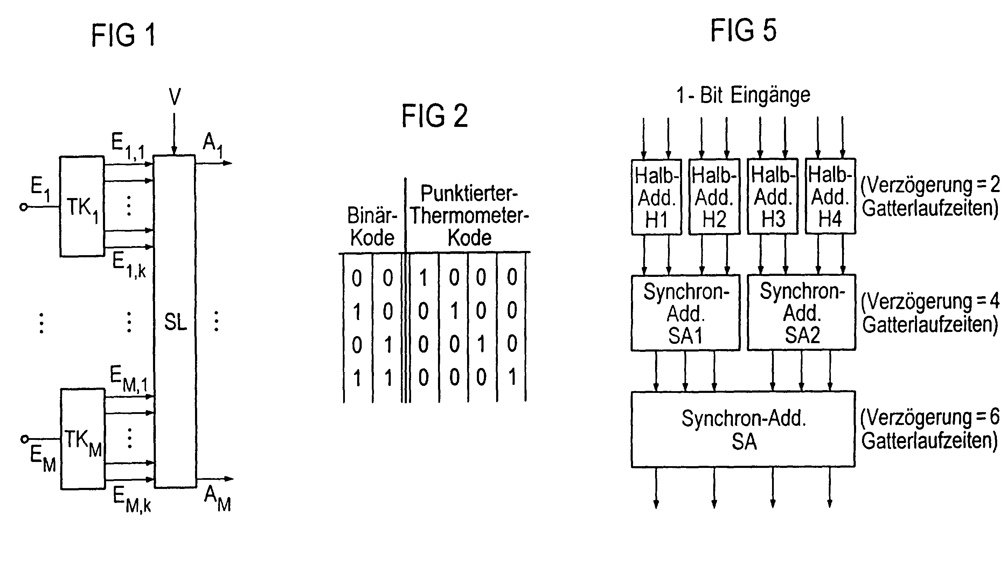

In Figur 1 ist ein Blockschaltbild eines Ausführungsbeispiels einer erfindungsgemäßen Vorrichtung mit einer Sortierlogik SL und M Umkodierern $TK_1$ ... $TK_M$ dargestellt, wobei hierbei deutlich wird, daß aus M binärkodierten Eingangssignalen bzw. Eingangsworten $E_1$ ... $E_M$ erweiterte Eingangsworte $E_{1,1}$ ... $E_{1,k}$ ... $E_{M,1}$ ... $E_{M,k}$ umgewandelt werden und dann erst durch die Sortierlogik SL zu einem Ausgangswort $A_1$ ... $A_M$ zur Festlegung Von n größten Eingangssignalen verarbeitet wird. Mit einem Steuersignal V wird in der Sortierlogik SL die gewünschte Anzahl n eingestellt, wobei n zwischen 1 und M sein kann.

In Figur 2 ist eine Logiktabelle für die Umkodierer $TK_1$ ... $TK_M$ in Form eines punktierten Thermometerkodes dargestellt, wobei das hier zwei Bit breite Eingangssignal 00 ein vier Bit breites erweitertes Eingangswort 1000, das zwei Bit breite Eingangswort 10 das erweiterte Eingangswort 0100, das Eingangswort 01 das erweiterte Eingangswort 0010 und das Eingangswort 11 schließlich das erweiterte Eingangswort 0001 liefert. Das Eingangswort wird derart umkodiert, daß die Position eines signifikanten Bits, hier die Eins, im erweiterten Eingangswort vom Wert des Eingangswortes abhängt.

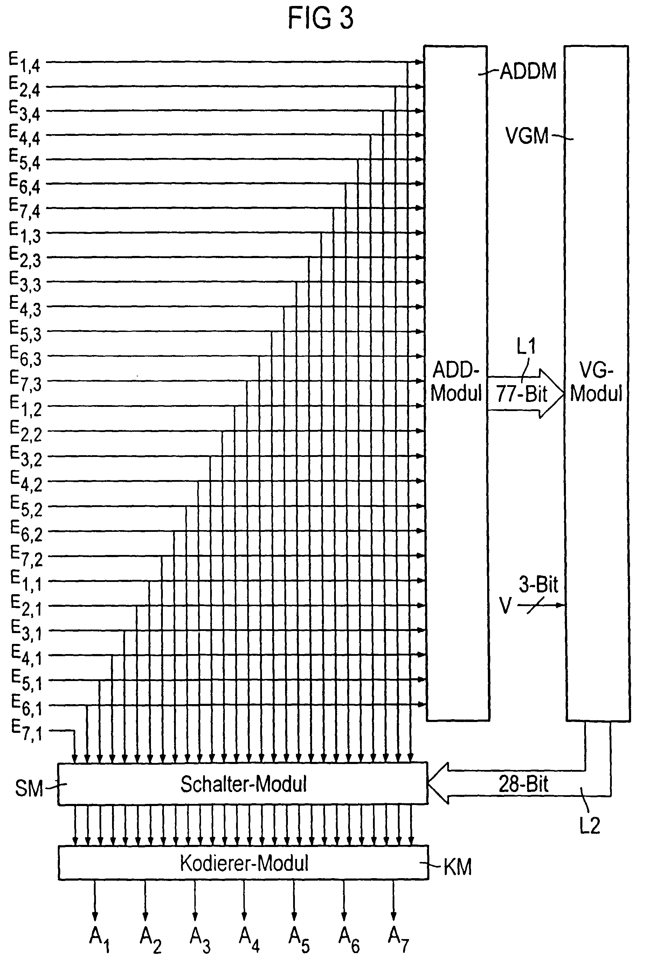

In Figur 3 ist ein Blockschaltbild einer Sortierlogik der erfindungsgemäßen Vorrichtung mit einem Addierermodul ADM, einem Vergleichermodul VGM, einem Schaltermodul SM und einem dem Schaltermodul nachgeschaltetem Kodierermodul KM dargestellt. Hierbei wird deutlich, daß die Bitsignale aller Eingangsworte nach ihrem Stellenwert und innerhalb eines gleichen Stellenwerts nach einer festen Reihenfolge geordnet sind und sowohl dem Addiermodul ADDM als auch dem Schaltermodul SM zugeführt werden. Das Addierermodul des ADDM ist über Leitungen L1, hier 77 parallele Bitleitungen, mit dem Vergleichermodul VGM verbunden. Das Vergleichermodul VGM erhält darüber hinaus das hier drei Bit breite Steuersignal V für die Anzahl n und ist über weitere Leitungen L2, hier 28 parallele Bitleitungen, mit dem Schaltermodul SM verbunden. In Abhängigkeit der Signale auf den Leitungen L2 werden Bitsignale der erweiterten Eingangsworte in Abhängigkeit der Signale auf den Leitungen L2 auf das Kodierermodul KM durchgeschaltet und dort in das Ausgangswort $A_1$ ... $A_7$ kodiert.

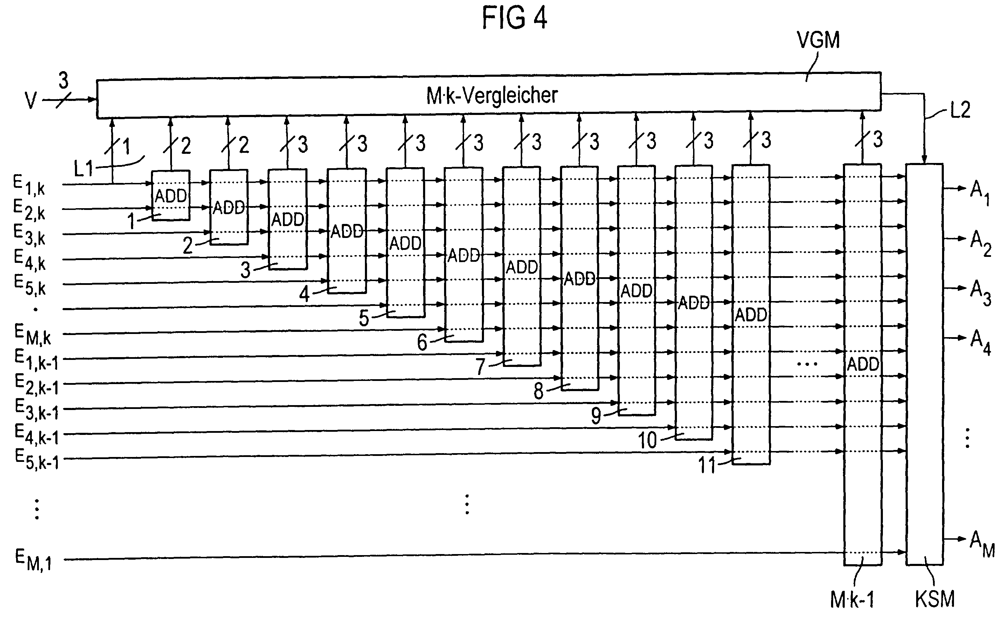

In Figur 4 ist ein detailliertes Blockschaltbild der Sortierlogik einer erfindungsgemäßen Vorrichtung dargestellt. Das Addiermodul ADDM in Figur 3 besteht

hier aus M*k-1 Addierern 1 ... M*k-1 , wobei k die Wortbreite des erweiteren Eingangswortes darstellt. Das höchstwertige Bit $E_{1,k}$ des Eingangswortes $E_1$ wird dabei direkt im Vergleichermodul VGM und allen ersten Eingängen der Addierer 1 ... M*k-1 zugeführt. Das höchstwertige Bit $E_{2,k}$ des Eingangsignales $E_2$ wird allen zweiten Eingängen der Addierer 1 ... M*k-1 zugeführt. In entsprechender Weise werden die höchstwertigen Bits dem i+1-ten Eingang des i-ten Addierers zugeführt, wobei nach dem Bitsignal $E_{M,k}$ in derselben Reihenfolge der Eingangssignale die nächst niedrigeren Bits usw. folgen. Hierbei wird deutlich, daß der i-te Addierer i+1 Eingänge aufweist und somit der letzte Addierer M*k-1 genau M*k Eingangsbits $E_{1,k}$ ... $E_{M,1}$ aufsummiert. Das Vergleichsmodul VGM weist M*k Vergleicher auf, die das Bitsignal $E_{1,k}$ bzw. die Ausgangssignale der M*k-1 Addierer, die über die Leitungen L1 dem Vergleichermodul VGM zugeführt werden, mit dem drei Bit breiten Steuer- bzw. Vergleichssignal V, das die Anzahl n repräsentiert, paralell vergleichen. Über die Leitungen L2 werden die Vergleichsergebnisse zu einer aus dem Schaltermodul SM und dem Kodierermodul KM bestehenden Einrichtung KSM zum Ausgangswort $A_1$ ... $A_M$ übertragen und dort mit den erweiterten Eingangsworten weiter verarbeitet. Die Addierer 1 und 2 liefern hier lediglich ein zwei Bit breites und die anderen Addierer ein drei Bit breites Ausgangssignal für das Vergleichermodul VGM.

Jeder der M*k Addierer AD summiert die Eingangssignale für einen entsprechenden Thermometerkode auf, so daß alle möglichen Thermometerkodes erfaßt werden. Die Ausgangssignale der Addierer 1 ... M*k-1 werden mit dem Steuersignal V, das die Anzahl der größten Werte vorgibt, verglichen. Stimmen Ausgangssignal eines jeweiligen Addierers mit dem Signal V überein, so gelangen dessen Eingangssignale zum Kodierermodul KM. Das Kodierermodul ordnet jedem Bitsignal des erweiterten Eingangswortes mit dem Pegel 1 ein Ausgangssignal $A_i$ ebenfalls mit dem Pegel 1 zu und alle anderen Ausgänge erhalten den Wert 0.

In Figur 5 ist zur Verdeutlichung der auftretenden Verzögerungszeiten ein Addierer mit acht 1 Bit Eingängen in Form einer Hierarchie aus vier Halbaddierern V1 ... V4, zwei nachgeschalteten Synchronaddierern SA1 und SA2 und einem abschließenden Synchronaddierer SA dargestellt, wobei die drei Addiererebenen jeweils zwei Gatterlaufzeiten bewirken und somit maxima sechs Gatterlaufzeiten für diesen Addierer erforderlich sind.

Insgesamt ergibt sich für die Realisierung mit M = 7 Eingangssignalen und jeweils k = 4 Wertigkeitsstufen für die in Figur 3 dargestellte Sortierlogik eine Verzögerung von 30 Gatterlaufzeiten, während eine eingangs angedeutete naheliegende Lösung 105 Gatterlaufzeiten benötigen würde. Bei diesem Beispiel ergibt sich ein Geschwindigkeitsvorteil von ungefähr Faktor 3,5. Je größer die Anzahl der Eingangssignale M ist, umso deutlicher wird der Vorteil der Erfindung gegenüber einer eingangs angedeuteten einfachen Vorrichtung zur Festlegung einer vorgegebenen Anzahl größter Signale.

## Patentansprüche

1. Vorrichtung zur schnellen Festlegung einer vorgebbaren Anzahl (n) größter Signale,

   bei der zunächst jedes Eingangswort ($E_1$ ... $E_M$) durch einen jeweiligen Umkodierer ($TK_1$ ... $TK_M$) in ein erweitertes Eingangswort (z. B. $E_{1,1}$ ... $E_{1,k}$) derart umkodiert wird, daß die Position eines signifikaten Bits im erweiterten Eingangswort vom Wert des Eingangswortes abhängt, und
   bei der eine Sortierlogik (SL) vorhanden ist, die in Abhängigkeit eines Anzahl-Steuersignals (V) für die Anzahl (n) aus den erweiterten Eingangsworten ein Ausgangswort ($A_1$ ... $A_M$) zur Festlegung der in ihrer Anzahl vorgegebenen größten Signale bildet.

2. Vorrichtung nach Anspruch 1,

   bei der die Bits der erweiterten Eingangsworte gemeinsam nach ihrem Stellenwert geordnet einem Addierermodul (ADDM) zuführbar sind, das über Leitungen (L1) für die Summensignale mit einem Vergleichermodul (VGM) verbunden ist, das seinerseits Vergleiche mit dem Anzahl-Steuersignal (V) durchführt und über weitere Leitungen (L2) ein Schaltermodul (SM) ansteuert,
   bei der ein Kodiermodul (KM) vorhanden ist, das aus den mit Hilfe der Schaltermoduls durchgeschalteten Bits der erweiterten Eingangsworte das Ausgangswort ($A_1$ ... $A_M$) zur Festlegung der in ihrer Anzahl vorgegebenen größten Signale bildet.

3. Vorrichtung nach Anspruch 2,

   bei der M*k-1 Addierer ( 1 ... M*k-1 ) vorhanden sind, wobei ein i-ter Addierer i-1 Eingänge aufweist, bei der das höchstwertige Bit ($E_{1,k}$) des ersten erweiteren Eingangswortes direkt dem Vergleichermodul zugeführt wird, und
   bei der den i-ten Addierern nach ihrem Stellenwert geordneten Bits aller erweiterten Eingangsworte der Reihe nach zugeführt sind.

## FIG 1

## FIG 2

| Binär-Kode | | Punktierter-Thermometer-Kode | | | |
|---|---|---|---|---|---|
| 0 | 0 | 1 | 0 | 0 | 0 |
| 1 | 0 | 0 | 1 | 0 | 0 |
| 0 | 1 | 0 | 0 | 1 | 0 |
| 1 | 1 | 0 | 0 | 0 | 1 |

## FIG 5

1- Bit Eingänge

| Halb-Add. H1 | Halb-Add. H2 | Halb-Add. H3 | Halb-Add. H4 | (Verzögerung = 2 Gatterlaufzeiten) |

| Synchron-Add. SA1 | Synchron-Add. SA2 | (Verzögerung = 4 Gatterlaufzeiten) |

| Synchron-Add. SA | (Verzögerung = 6 Gatterlaufzeiten) |

EP 0 984 355 A2

# FIG 3

FIG 4